# EUROPEAN PATENT APPLICATION

(11) **EP 0 898 017 A1**
(43) Date of publication of application: **24.02.1999**
(21) Application number: 98108311.6
(22) Date of filing: 07.05.1998
(51) Int. Cl.: E01C 7/00, C08K 7/02, C09D 5/34, E01C 11/10

(54) **Fiberized resin and structure produced therefrom by molding**

(30) Priority: 18.08.1997 JP 221755/97
(71) Applicant: Sasaki, Atsuki, Yokohama-Shi, Kanagawa-Ken (JP)
(72) Inventor: Sasaki, Atsuki, Yokohama-Shi, Kanagawa-Ken (JP)
(74) Representative: Luderschmidt, Schüler & Partner GbR

(57) **Abstract**

A fiberized resin (12) which enables viscosity, suitable for use, to be selected without sacrificing properties inherent in a liquid resin and, at the same time, causes no sagging of the liquid, and a structure produced by molding the fiberized resin (12).

The fiberized resin (12) is produced by kneading a liquid resin (11) with fibers (10), having a diameter of not more than 50 µm and a length of not more than 20 mm, heated to a temperature above the temperature of the liquid resin (11) to deposit and coat the liquid resin (11) onto the surface of the fibers (10) to a saturated state, or alternatively to deposit and coat the liquid resin (11) onto the surface of the fibers (10) to a saturated state and, at the same time, to impregnate the liquid resin (11) into the interior of the fibers (10) to a saturated state.

The structure is produced by kneading a liquid resin (11) with fibers (10) heated to a temperature above the temperature of the liquid resin (11) to deposit and coat the liquid resin (11) at least onto the surface of the fibers (10) to a saturated state, thereby preparing a fiberized resin (12), kneading the fiberized resin (12) with aggregates of small diameter solids, and molding and solidifying the resultant mixture into a predetermined form.

## Description

### BACKGROUND OF THE INVENTION

### Technical Field

The present invention relates to a fiberized resin, for use as a binder, and a structure using the same, and more particularly to a fiberized resin for use as an adhesive, a coating material, and a binder and a structure produced by mixing the fiberized resin with a solid material and molding the mixture into a suitable form.

### Description of the Prior Art

Liquid resins have been generally used as an adhesive which is coated onto a bonding face, as a coating material which is coated onto a flat surface, or a binder, like cement or asphalt, which is mixed with a solid material as an aggregate to prepare a mixture followed by preparation of a structure having a suitable shape from the mixture.

However, the liquid resin, due to its fluidity, undergoes restrictions on service conditions. Specifically, when the liquid resin is thickly coated-or dished up, particularly when the liquid resin is coated on the surface of a wall, which has been vertically placed, by using a brush, a spatula, a spray gun or the like, a sagging phenomenon, wherein the liquid resin is moved downward by self-weight in a period between the coating of the liquid resin and the solidification of the liquid resin, occurs posing problems including that the coated face cannot be evenly finished and the coating cannot be fully solidified.

For this reason, it is necessary to use a method wherein the liquid resin is applied to form a coating having a thickness, which does not cause sagging, the coating is solidified, and the above coating onto the coating face followed by drying is repeated a plurality of times to provide desired thickness.

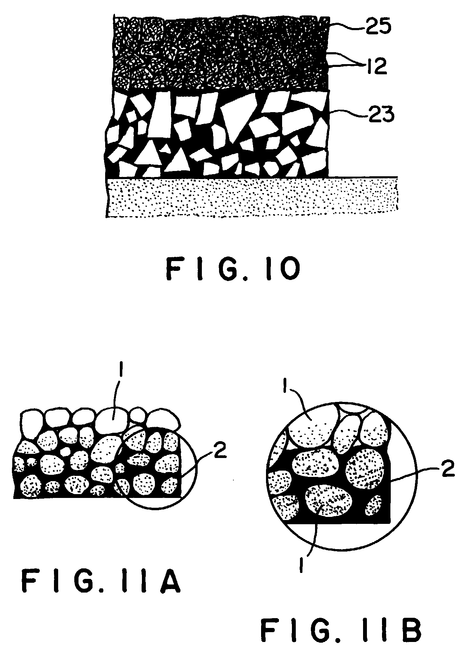

On the other hand, when the liquid resin is used as a binder, like cement or asphalt, the liquid resin is mixed with a solid material to prepare a mixture which is then used as a material for a structure having a suitable shape. This method has the following problems. Specifically, when the mixture is placed in a mold or the like to prepare a block or a structure, or to prepare a structure such as a road surface or a civil engineering and construction structure, a sagging phenomenon occurs before the liquid resin coated onto the object to be bonded is fully solidified. That is, as shown in FIGS. 11A and 11B, the liquid resin 2 alone is passed through gaps among solid materials 1 and sinks downward, so that the amount of the liquid in the upper part of the structure is remarkably different from that in the lower part of the structure. As a result, the strength and the bonded state of the structure are not even, making it impossible to expect satisfactory strength. Therefore, the largest possible thickness of the structure is about 1.5 to 2 times the thickness of the grain diameter of the solid material to be mixed.

Accordingly, in order to reduce the sagging phenomenon, a proposal has been made to add a thickener or an additive to the liquid resin to enhance the viscosity. However, when the viscosity is excessively enhanced, the workability is deteriorated and, in addition, the liquid resin is used in a larger amount than required. Therefore, the sagging phenomenon of the liquid resin cannot be fully eliminated in a proper viscosity region.

Another proposed method is such that rock wool is mixed with a liquid resin to prepare a mixture to which a thickener is added to enhance the viscosity. In this method, however, the rock wool, when mixed with the liquid resin, is broken and brought to a powder. The rock wool is produced by melting a rock at a high temperature and then cooling the melt. It is brought to a fibrous form having a diameter of about 7 µm and a length of about 20 mm and is in a cotton form. Each filament material of rock wool is an aggregate constituted by finely divided rock and simply broken into a powder by low external pressure and cannot retain the form of fibers. Further, the material of the rock wool per se does not have such a property that it absorbs or is impregnated with the liquid resin. In this case, the resin is merely deposited onto the surface of the powdered rock wool and merely exhibits thickening action to enhance the viscosity. Since water contained in the air is deposited onto the surface of the powdered rock wool, the powdered rock wool as the thickener for the liquid resin is an unfavorable factor for the properties of the resin per se.

That is, the sagging cannot be prevented so far as the liquid resin is in a liquid state. When the viscosity is enhanced to such an extent that the sagging is created no longer, the resin is changed from the liquid state to the solid state. In this case, the resin partially cures due to the viscosity and the volatility inherent in the resin. This creates internal curing or otherwise has great adverse effect on the performance or properties of the resin per se. Thus, the prior art techniques have problems including that the liquid resin cannot be easily coated or mixed with a solid material to prepare a mixture and, even though the mixing could be carried out, the resultant mixture is a undesired one.

### SUMMARY OF THE INVENTION

Accordingly, an object of the present invention is to provide a fiberized resin which permits viscosity, suitable for use, to be selected and in addition does not create sagging without sacrificing the properties inherent in the liquid resin, and a structure produced by molding the fiberized resin.

According to one aspect of the present invention, there is provided a fiberized resin produced by kneading a liquid resin with fibers, having a diameter of not more than 50 µm and a length of not more than 20 mm, heated to a temperature above the temperature of the liquid resin to deposit and coat the liquid resin onto the surface of the fibers to a saturated state and, in some cases, to impregnate the liquid resin also into the interior of the fibers to a saturated state.

According to another aspect of the present invention, there is provided a structure produced by kneading a liquid resin with fibers heated to a temperature above the temperature of the liquid resin to deposit and coat the liquid resin at least onto the surface of the fibers to a saturated state, thereby preparing a fiberized resin, kneading the fiberized resin with aggregates of small diameter solids, and molding and solidifying the resultant mixture into a predetermined form.

According to the fiberized resin of the present invention, the liquid resin is coated onto the surface of the fibers to a saturated state, and the viscosity of the resin on the surface of the coated fibers creates complicate entanglement of the fibers with one another to constitute a new pasty material, solving the problem of the sagging. In addition, combinations of a wide variety of fibers and resins can provide fiberized resins having new excellent properties which are usable in a region of applications where the conventional liquid resin could not be used. Further, since the resin is in a state of integration with the fibers, the fiberized resin has strength properties equal to or superior to reinforced plastics. Further, the fiberization of the resin can create various new properties depending upon applications.

Use of the fiberized resin as an adhesive, by virtue of freedom from sagging, neither causes soiling of the circumference of the coating site created by running of the adhesive in the case of taking the fiberized resin out of a container and in the case of coating, dishing-up, pouring and other work, nor creates uneven coating, so that waste of the adhesive is reduced and, in addition, the bond strength is improved.

Use of the fiberized resin as a coating material or as a barrier coat material, by virtue of freedom from sagging, permits the fiberized resin to be evenly coated to a target coating thickness by single coating and, in addition, can offer very excellent bond strength and coating strength.

Since the fiberized resin contains fibers, use of the fiberized resin as a molding material can offer moldings having strength equal to or superior to reinforced plastics and hence can eliminate the need to introduce a cloth of glass fibers during molding. Therefore, simplification of the molding operation can be expected, and moldings having excellent strength can be produced.

Use of the fiberized resin as a binder, by virtue of freedom from sagging, permits a solid material as an aggregate to be mixed with the fiberized resin to prepare a fiberized resin mixture which may be then used to prepare any bulky structure. In this case, by virtue of freedom from sagging, the whole structure is homogeneous and well made, the bond strength between aggregates is high and equal to or superior to that in reinforced plastics, creating substantially no deformation. In addition, since the fiberized resin is solidified in a cobweb form, gaps among the aggregates are firm and can retain the shape for a long period of time. Furthermore, mixing of the fiberized resin with the solid material permits the surface of the solid material to be coated wit the fiberized resin in a thick layer form, substantially preventing components of the solid material from being eluted. Therefore, any waste including an industrial waste can be brought to grains having a diameter of not more than 30 mm and reused as the aggregate (solid material). Furthermore, the structure according to the present invention has a percentage void of 30 to 18% and hence has a small weight per unit volume, excellent sound absorption and water permeability, good air permeability, and the effect of preventing the surface temperature from being raised by heat.

### BRIEF DESCRIPTION OF THE DRAWINGS

FIGs. 1A and 1B are respectively a diagram showing appearance of a fiberized resin in a paste state and a partially enlarged view of the fiberized resin;
FIGs. 2A and 2B are respectively a cross-sectional view of a structure prepared using a fiberized resin binder and a partially enlarged view of the structure;
FIG. 3 is a diagram showing appearance in the case where a fiberized resin adhesive is coated onto a wood plate and a block is bonded to the wood plate through the adhesive;
FIG. 4 is a diagram showing appearance in the case where blocks of different materials are bonded to each other;
FIGs. 5A and 5B are respectively a diagram showing a metallic mold for use in molding of a container body and a diagram showing a metallic mold for use in molding of a lid portion of the container;
FIG. 6 is a diagram showing a hermetically sealable container of a fiberized polyester resin produced by molding;
FIGs. 7A and 7B are respectively a diagram showing appearance in the case where a fiberized resin is poured into a flat plate of concrete in its cracked portion and further coated on one side of the plate and a partially enlarged view of Fig. 7A;
FIG. 8 is a partially enlarged sectional view of a flat block prepared using a fiberized resin binder;
FIG. 9 is a cross-sectional view showing pavement of the surface of a road using a mixture of a fiberized resin binder with gravel;
FIG. 10 is a cross-sectional view showing pavement of the surface of a road using a mixture of a fiberized resin binder with a crushed stone; and
FIGs. 11A and 11B are respectively a sectional view and a partially enlarged view illustrating an uneven structure suffering from sagging.

### DETAILED DESCRIPTION OF THE PREFERRED EMBODIMENTS

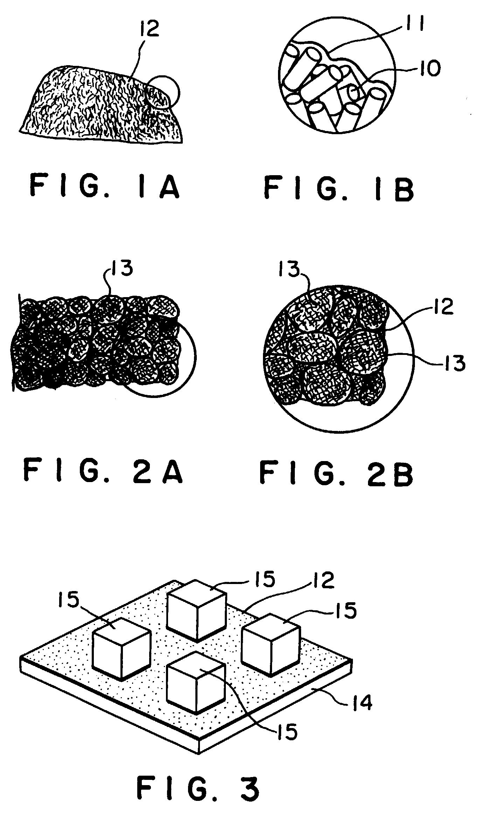

As shown in FIG. 1, fibers 10, such as natural or chemical fibers which have been cut into a size of not more than 50 µm in diameter and not more than 20 mm in length, are heated to a temperature of several degrees centigrade above the temperature of a liquid resin 11 and immersed in the liquid resin 11. When the fibers are hygroscopic or water-absorptive, the liquid resin is impregnated into the interior of the fibers until the impregnation reaches a saturated state. Next, the liquid resin in an amount large enough to satisfactorily coat the surface of the fibers is further fed until the coating of the liquid resin on the surface of the fibers reaches a saturated state. When the fibers are neither hygroscopic nor water-absorptive, that is, when the liquid resin cannot be impregnated into the interior of the fibers, the liquid resin in an amount large enough to satisfactorily coat the surface of the fibers is fed until the coating reaches a saturated state.

A large amount of the fibers, to which the liquid resin has been applied to a saturated state, are collected and slowly mixed and kneaded together to prepare a new pasty material shown in FIG. 1A and FIG. 1B. In this case, due to the viscosity of the liquid resin 11 which coats the surface of the fibers 10, the fibers 10 are parallelly put on top of one another or continue, are, in a tandem form, put on top of one another or continue, and are randomly entangled with one another to form a pasty aggregate of the fibers coated with the liquid resin. This aggregate constitutes a fiberized resin 12.

The viscosity of the liquid resin is usually in the range of 1 to 50 poises. As described above, however, introduction of the liquid resin into the fibers to a saturated state followed by mixing and kneading can provide resins having a viscosity in the range of from 5000 to 400000 poises. That is, the surface of each fiber is coated with the liquid resin in a thick layer form, and, in addition, the fibers are entangled with one another, resulting in enhanced viscosity.

In general, the liquid resin suffices for the deposition onto 5 to 50% by weight of the fibers to a saturated state although this varies depending upon the viscosity of the liquid resin and the properties of the fibers. When the liquid resin is deposited onto the fibers in a saturated state, there is no possibility that the liquid resin alone settles.

In the case of feeding of the liquid resin to the fibers followed by mixing until the application of the liquid resin to the fibers reaches a saturated state, mere introduction of the liquid resin into the fibers, rather than introduction of the fibers into the liquid resin, followed by mixing cannot result in proper integration of the fibers with the liquid resin through the coating of the fibers with the liquid resin. Further, in this case, in some liquid resins, the bond strength is influenced, so that proper bond strength cannot be expected. In some cases, after the solidification, the separation of the fibers from the resin within the bonded structure is often created.

For this reason, in the present invention, as described above, when the liquid resin is fed into and mixed with the fibers to apply the liquid resin to the fibers to a saturated state, the fibers are previously heated at a temperature which is at least 1°C above the temperature of the liquid resin and does not cause a change in quality of the fibers and the liquid resin. The above heating increases the volume of the fibers due to thermal expansion. In this case, at the same time, the surface area is increased, and, in this state, the application of the liquid resin to the fibers are allowed to reach the saturated state. Therefore, when the temperature is returned to room temperature after the saturation, the thickness of the liquid resin layer coated onto the surface of the fibers is increased. This increases the bond strength of the resultant fiberized resin and satisfactorily enhances the adhesion between the fibers and the liquid resin.

In the present invention, the resultant fiberized resin is in a state just like that the liquid portion has been removed. Even when the fiberized resin is coated on the surface of a wall which is vertically placed, the fiberized resin can be coated in the same manner as used in the coating of the liquid resin and, since no sagging is created, the coating thickness can be regulated according to the applications. Further, the surface finishing and the strength and various properties of the coated material are even, and properties of the resin can be satisfactorily utilized.

Further, according to the fiberized resin of the present invention, settling of the resin (sagging) does not occur, and, in addition, the properties of the resin per se are not deteriorated. Furthermore, when a bulky structure is prepared using the fiberized resin, the fiberized resin is evenly distributed in the whole bulky structure and the characteristics, inherent in the resin, in terms of the bond strength, bonded state, and various properties as such can be utilized. In the prior art technique using a liquid resin, since the liquid is constituted by an aggregate of very fine liquid particles, gaps among solid materials are left, in this state, as space, or otherwise are filled with the liquid resin. By contrast, in the case of the fiberized resin according to the present invention, solid materials are mixed together in such a state that the solid materials in their surfaces are coated with the fiberized resin, and, thereafter, the mixture is placed in a mold or the like. The solid material is finally fixed by vibration or rolling. During the above steps, the solid materials are rubbed against one another, causing the fiberized resin coated onto the solid materials to be entangled with one another. As a result, as shown in FIGs. 2A and 2B, the fibers in a part of the fiberized resin 12 coated onto the solid materials are webbed like a cobweb in gaps among the solids 13, so that a fiberized resin filter in a network form is randomly and three-dimensionally formed. The bulky structure can be solidified in this state by a suitable curing method selected according to the properties of the resin and the workability, permitting a structure to be completed while maintaining the shape.

Regarding the bond strength of the structure solidified by the method of present invention, the strength of the fiberized resin per se is utilized. In addition, after the solidification, the components of the structure are hardly eluted. Further, the properties of the liquid resin as such are taken over by the fiberized resin without being deteriorated. Therefore, no special consideration is required in the selection of the liquid resin material, and a suitable liquid resin material may be selected from a wide variety of materials according to the applications.

Further, in reinforced plastics currently used in industries, a woven fabric of glass fibers is inserted in the liquid resin followed by solidification, thereby creating high strength unattainable by the solidification of the liquid resin per se. However, advanced molding skill is required in the production of the reinforced plastics. By contrast, in the case of the fiberized resin, since the liquid resin has been applied to the fibers to a saturated sate, the fiberized resin per se has properties comparable to the reinforced plastics.

Regarding solidification, as with the liquid resin, the fiberized resin may be cured by any of a two-component method using a curing agent, a thermoplastic method wherein heating is carried out, and an oxidation method wherein a reaction with water contained in the air is utilized, without using any special means. Further, various methods of use can be selected.

The following examples illustrate the fiberized resin of the present invention and use of the fiberized resin of the present invention as an adhesive, a coating material, a molding material, and a binder.

### Example 1

Glass fibers having a diameter of not more than 7 µm and a length of not more than 8 mm were selected from among nonhygroscopic and water-nonabsorptive fibers. 5% by weight of the glass fibers were heated to 40°C and satisfactorily immersed in a liquid resin having a viscosity of 45 poises while adding the liquid resin one-fifth by one-fifth, and the system was slowly agitated while disintegrating the glass fibers by means of an agitator.

The mixing and agitation were slowly repeated while feeding the liquid resin one-fifth by one-fifth to the fiber until the saturated state was attained. In this case, the agitation was continued until the liquid resin became invisible, thus attaining the saturated state.

The fiberized resin thus prepared had a viscosity of 1200000 poises, was a soft pasty aggregate of fibers, and, in use, posed no trouble.

Separately, natural fibers, such as cotton and silk, and chemical fibers, such as glass, carbon, aluminum, and ceramic, were used as the fibers. In any combination of the above fibers with the liquid resin, use of the fiber in an amount of 1 to 20% by weight based on weight of the liquid resin provided the saturated state.

Further, a liquid resin having a very low viscosity 1 poise was immersed 10% by weight of the fibers heated to a temperature of 20°C above the temperature of the liquid resin. They were slowly mixed with stirring, and 1 to 5% by weight of a thickener was added to the resultant fiberized resin in a saturated state to modify the viscosity. In this way, the viscosity could be modified in the range of 50000 to 400000 poises. The state of the fiberized resins was visually inspected, and, as a result, it was found that all the above cases could provided satisfactorily fiberized resin.

### Example 2

50 g of glass fibers (diameter 7 µm, length 3 mm) of 45°C were placed in a vessel and satisfactorily disintegrated. An epoxy liquid synthetic resin of 20°C was added 500 g by 500 g, and the epoxy liquid synthetic resin was further added 500 g by 500 g while slowly mixing and kneading the fibers with the epoxy liquid synthetic resin. It was confirmed that the saturated state was attained when the total amount of the epoxy liquid synthetic resin reached 1500 g. Thus, a fiberized resin was prepared.

A curing agent for curing the fiberized resin prepared above was added in an amount of 50% by weight based on the total weight of the epoxy liquid synthetic resin. The system was kneaded to prepare a fiberized resin adhesive. As shown in FIG. 3, the fiberized resin adhesive 12 was coated on one side of a wood plate 14 having a size of 300 mm in length, 300 mm in width, and 10 mm in thickness by means of a spatula and a brush to a thickness of about 0.2 mm. A block solid of each material of wood, rubber, metal, cement concrete and the like in a cubic form having one side length of 50 mm was provided, one surface as a bonding face was put on top of the wood plate 14 in its side where the adhesive had been applied.

After curing of the adhesive, an attempt to measure the bond strength was made by applying a load to the front end of the bonding face of each block. As a result, the bonded surface was not separated at all, and the wood plate was broken.

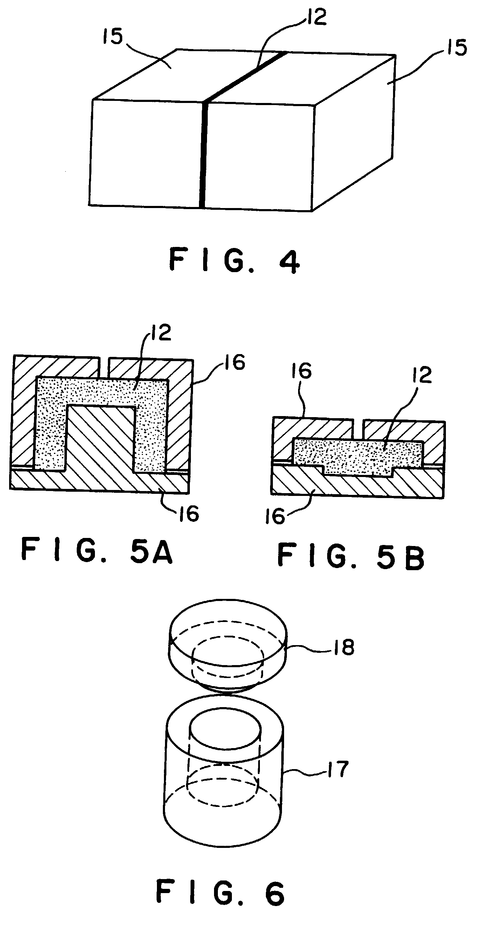

Further, as shown in FIG. 4, the fiberized resin adhesive 12 was coated on one surface of a cubic block solid 15, in a cubic form having an one side length of 50 mm, made of wood, rubber, metal, cement concrete or the like to a thickness of about 0.2 mm, and bonding between the blocks identical to each other in material and bonding between the blocks different from each other in material were attempted. As a result, it was found that the bond strength was satisfactory for practical use.

Thus, it could be confirmed that the fiberized resin prepared by applying an epoxy liquid synthetic resin to glass fibers to a saturated state had properties good enough to be used as an adhesive.

### Example 3

50 g of carbon fibers (diameter 5 µm, length 5 mm) heated to 50°C were placed in a vessel and satisfactorily disintegrated. A polyester liquid synthetic resin of 20°C was added 500 g by 500 g and slowly mixed and kneaded with the carbon fibers. Further, the mixing and kneading were repeated while adding the polyester liquid synthetic resin 500 g by 500 g. It was confirmed that the saturated state was attained when the total amount of the polyester liquid synthetic resin added reached 1700 g. Thus, a fiberized resin was prepared.

In order to solidify the fiberized resin prepared above, a curing agent was added in an amount of 3% by weight based on the polyester liquid synthetic resin and kneaded with the fiberized resin. The resultant mixture was used as a molding material.

The fiberized polyester resin 12 was injected into metallic molds 16 respectively shown in FIGS. 5A and 5B to mold and solidify a hermetically sealable vessel 17 (internal volume 200 ml, wall thickness 10 mm) and a lid 18 shown in FIG. 6.

PCB (97%) was placed in the hermetically sealable vessel made of the fiberized polyester resin, and the vessel was then hermetically sealed to conduct an elution test. As a result, no elution of the component occurred, demonstrating that complete containment could be attained. Further, it was confirmed that, by virtue of the incorporation of fibers, the vessel per se had larger strength than conventional moldings of a liquid synthetic resin.

From the above results, it is apparent that the fiberized resin prepared by applying a polyester liquid synthetic resin to carbon fibers to a saturated state can be used as a molding material, has strength comparable with reinforced plastics and in addition can be used for the containment of PCB.

### Example 4

50% by weight of a cotton yarn as a natural fiber (length 5 mm) and 50% by weight of a silk yarn as a natural fiber (length 5 mm) were heated to 60°C and mixed together, 50 g of the fibers was mixed, and a vinyl ester liquid synthetic resin of 15°C was added 500 g by 500 g to and slowly kneaded with the fibers while satisfactorily disintegrating the fibers. The mixing and kneading were repeated while further adding the vinyl ester liquid synthetic resin 500 g by 500 g. When the total amount of the vinyl ester liquid synthetic resin added reached 2000 g, the saturated state was attained. Thus, a fiberized resin was prepared. In order to modify the viscosity, a thickener was added in two divided portions (total amount 10 g) to and kneaded with the fiberized vinyl ester resin to bring the viscosity of the fiberized vinyl ester resin to a value suitable for coating work. A curing agent for solidifying the fiberized resin thus prepared was added and kneaded with the fiberized resin, and the resultant mixture was used as a coating material.

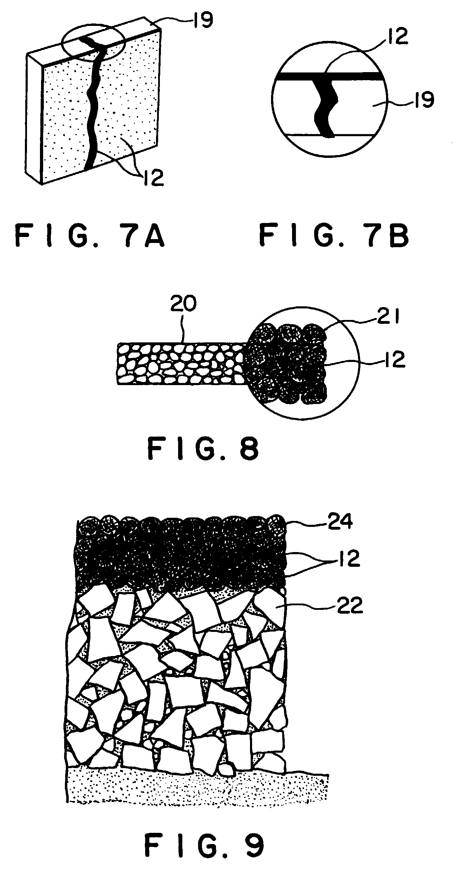

As shown in Fig. 7, a cracked flat plate 19 of cement concrete was placed vertically, and the fiberized vinyl ester resin 12 was filled into the gap of the crack by means of a spatula and further coated on the whole one surface of the flat plate to a thickness of about 3 mm.

In this case, the fiberized resin was evaluated for the effect attained by filling into the cracked portion, the bonding effect, the development of sagging at the time of coating, and the workability. As a result, all the filling effect, the bonding effect, and the workability were good, and no sagging was created. After the completion of the solidification, the bond strength and the surface strength regarding the cracked portion and the coated surface were satisfactory, and, in addition, no leakage of the fiberized resin from the cracked portion was created.

From the above results, it is apparent that the fiberized resin prepared by applying a vinyl ester liquid synthetic resin to natural fibers to a saturated state can be used as a coating material, does not cause sagging at all, and, when the viscosity was modified, can offer good workability.

### Example 5

23 kg of a mixture of 50% of glass fibers having a diameter of 7 µm and a length of 6 mm with glass fibers having a length of 3 mm was satisfactorily disintegrated while mixing, heated to 35°C, and placed in an agitating device for kneading. Further, 477 kg of a polyester liquid synthetic resin of 15°C was added to the fibers in the agitating device while kneading. 5 min after the addition of the polyester liquid synthetic resin, the saturated state was attained, thereby preparing a fiberized resin. Thereafter, 1 kg of a thickener was added to the fiberized resin to prepare about 500 kg of a fiberized polyester resin having a viscosity of 150000 poises. This fiberized resin was used, below, as a binder, and various solids were used as an aggregate to prepare bulky structures.

For the aggregates, gravel (grain diameter 2-8 mm), crushed stones (grain diameter 2-20 mm), river sands, wastes (plastics, glass, shells, rubbers, metal slag, wood chips, rice husks, ceramic ware, cement, and asphalt concrete and the like having a grain diameter of 3 to 10 mm were selected and provided.

A flat plate block 20, shown in FIG. 8, having a size of 300 mm in length, 300 mm in width, and 30 mm in thickness was prepared using the above-described various aggregates.

At the outset, an aggregate 21 (single kind) was introduced into a mixer for kneading cement concrete or mortar. 4 to 10% by weight, based on the weight of the aggregate, of the fiberized resin 12 was added to the aggregate 21, and the mixture was agitated and kneaded in the mixer to prepare a mixture of the aggregate with the fiberized resin. After the mixture was agitated for about 5 min, it could be confirmed that the fiberized 12 was coated in a thick layer form onto the surface of the aggregate 21. Subsequently, 3% by weight, based on the fiberized resin used, of a curing agent for solidifying the fiberized resin was introduced into the mixer, followed by kneading.

The aggregate mixture was introduced into a mold for a flat plate block while lightly vibrating the whole mold, and finishing was performed while pressing a metallic trowel against the surface of the aggregate mixture. After solidification, the resultant bulky structure in a flat plate block form was removed from the mold and bonded to another solid, with the fiberized polyester resin binder, thereby preparing a bulky structure. Thus, it was found that the fiberized resin is a binder best suited for enabling various solids to be used as an aggregate, has no specialty also in workability, and can provide a structure having excellent strength and various properties.

### Example 6

23 kg of glass fibers having a diameter of 7 µm, which have been cut into very short length of 0.3 mm and heated to 45°C, were placed in an agitating device for kneading. Subsequently, 477 kg of a mixture (15°C) of 430 kg of a polyester liquid synthetic resin with 47 kg of a urethane liquid synthetic resin was introduced into the agitating device wherein the mixture was slowly kneaded with the glass fibers. About 5 min after the initiation of the kneading, it was confirmed that the saturated state was attained. Thus, a fiberized resin was prepared. In this stage, the fiberized resin was in such a state that short glass fibers of 0.3 mm in length continued due to the viscous nature of the resin with which the fibers had been coated, thereby creating a shape like long fibers. 5 kg of a thickener was added to the fiberized resin to enhance the viscosity to 200000 poises suitable for use. This polyester/urethane fiberized resin was used as a binder, and gravel (grain diameter 3-8 mm) and crushed stone (grain diameter 3-8 mm) were used as aggregates to prepare a pavement material for the surface of a base course which was then used to conduct paving of a road.

At the outset, a base course having a width of 5 m and a length of 10 m was provided and divided into two equal parts of 5 m which were used to provide two foundation base course materials. In one of the foundation base course materials, a 150 mm-thick crushed stone layer 22 was provided, while in the other foundation base course material, a 50 mm-thick asphalt concrete layer 23 was provided. The surface paving material using a fiberized resin binder was applied to the surface of the foundation base course materials to a thickness of 30 mm.

Specifically, gravel (2 m³, about 3.4 tons) was introduced into a large-size truck mixer agitator for ready mixed concrete, about 204 kg (6% by weight based on the gravel) of the fiberized resin binder was added to the gravel, and the mixer was rotated to knead the gravel with the binder for 10 min. After the coating of the fiberized resin in a thick layer form onto the surface of the gravel was confirmed, 4 kg of a curing agent was added, followed by kneading for one min, thereby preparing a surface pavement material.

The pavement material thus prepared was taken out of the truck mixer agitator and dumped directly onto the surface of the road, spread and leveled by means of a rake, rolling was carried out while applying vibration by means of a compactor, and, finally, finishing was carried out using a metal trowel. As shown in FIG. 9, the surface course base was free from sagging of the fiber-reinforced resin 12, had proper gaps, and had an even sectional structure.

Separately, a surface pavement material was prepared in a large-size mixer agitator in the same manner as described above, except that crushed stone 25 (2 m³, 3.3 tons) was used instead of the gravel 24. The surface pavement material was spread over the road and leveled using a finisher (spreading/rolling machine for base course material) for asphalt pavement. Thus, the surface pavement material was mechanically applied. The finisher is a machine which, after the pavement material was dumped from the truck mixer agitator, can spread and level the pavement material while self-advancing and further can press the surface of the road while applying vibration to conduct finishing. Therefore, work which requires human power could be significantly reduced.

As shown in FIG. 10, the surface course base was free from sagging of the fiber-reinforced resin 12 toward the asphalt concrete layer 23, had proper gaps, and had an even sectional structure.

The above results shows that, in the fiberized resin, civil engineering and construction installations and tools thereof in current use as such may be used, there is no specialty in use and workability; on the contrary, the workability can be improved, and the resultant surface course base is an excellent structure, indicating that the fiberized resin is satisfactory as a binder.

## Claims

1. A fiberized resin produced by kneading a liquid resin with fibers, having a diameter of not more than 50 µm and a length of not more than 20 mm, heated to a temperature above the temperature of the liquid resin to deposit and coat the liquid resin onto the surface of the fibers to a saturated state.

2. The fiberized resin according to claim 1, the liquid resin has been impregnated also into the interior of the fibers to a saturated state.

3. The fiberized resin according to claim 1 or 2, which has been mixed and kneaded with aggregates of small diameter solids, such as crushed stones or sands, to bond the aggregates to one another.

4. A structure produced by kneading a liquid resin with fibers heated to a temperature above the temperature of the liquid resin to deposit and coat the liquid resin at least onto the surface of the fibers to a saturated state, thereby preparing a fiberized resin, kneading the fiberized resin with aggregates of small diameter solids, and molding and solidifying the resultant mixture into a predetermined form.

5. The structure according to claim 4, wherein the molding is carried out by pouring the mixture, prepared by kneading the fiberized resin with the aggregates, into a mold or the like.

6. The structure according to claim 5, wherein the mixture prepared by kneading the fiberized resin with the aggregates is spread in a layer form over the surface of a road to provide pavement.
